# EUROPÄISCHE PATENTSCHRIFT

(11) **EP 0 747 587 B1**
(45) Veröffentlichungstag und Bekanntmachung des Hinweises auf die Patenterteilung: **16.08.2000**
(21) Anmeldenummer: 96105400.4
(22) Anmeldetag: 04.04.1996
(51) Int. Cl.: F02D 9/10, F02B 27/02, F16K 27/02, B29C 45/00

(54) **Einrichtung zur Einstellung der Rohrlänge von Saugrohren und Verfahren zu deren Herstellung**
Device for adjusting the pipe length of an intake manifold and method of manufacture
Dispositif pour ajuster la longueur de tuyaux d'un dispositif d'admission et procédé de fabrication

(30) Priorität: 10.06.1995 DE 19521169
(43) Veröffentlichungstag der Anmeldung: 11.12.1996
(73) Patentinhaber: ROBERT BOSCH GMBH, 70442 Stuttgart (DE)
(72) Erfinder: Krimmer, Erwin, 73655 Pluederhausen (DE); Schellenberg, Gerhard, Dipl.-Ing., 70734 Fellbach (DE); Baur, Peter, Dr. Dipl.-Ing., 70186 Stuttgart (DE)

(56) Entgegenhaltungen:
- EP-A- 0 482 272
- EP-A- 0 575 235
- DE-A- 2 627 346
- FR-A- 2 606 115
- FR-A- 2 687 601
- US-A- 4 660 996
- US-A- 4 860 706
- US-A- 5 005 532

## Beschreibung

Die Erfindung betrifft eine Sauganlage für Brennkraftmaschinen nach dem Oberbegriff des Anspruchs 1.

### Stand der Technik

Sauganlage für Brennkraftmaschinen, insbesondere für Kraftfahzeugmotoren, sind bereits in vielfältigen Ausführungen bekanntgeworden. So beschreibt beispielsweise die DE 42 12 807 eine Kunststoffsauganlage für Brennkraftmaschinen, die aus zwei Halbschalen hergestellt wird. Für eine hohe Gasdruckfestigkeit werden die beiden Halbschalen miteinander verschweißt und zusätzlich durch Verbindungselemente ummantelt.

Weiterhin sind nach dem Stand der Technik bereits Sauganlagen bekannt, bei denen ein Saugrohr mittels einer Steuerklappe in seiner Länge in wenigstens zwei verschiedenen Längen verstellbar ist. Üblicherweise wird ein derartiges Saugrohr spiralförmig angeordnet. Im Zentrum der Spirale befindet sich eine Luftkammer mit einer Lufteinlaßöffnung für die Luftzufuhr.

Ausgehend von dieser Luftkammer ist ein Rohr spiralförmig um diese Kammer herumgewunden, das mit seinem Ende an einen Zylinder eines Verbrennungsmotors angeschlossen wird. Über einen Durchbruch in der Seitenwand der Luftkammer kann ein Teil der Rohrlänge überbrückt werden. In diesem Durchbruch wird üblicherweise eine Steuerklappe angeordnet, mittels der der Durchbruch geöffnet bzw. geschlossen werden kann. Über diese Steuerklappe läßt sich somit die aktive Länge des Saugrohres in zwei Stufen verstellen, wodurch ein besserer Drehmomentverlauf der Brennkraftmaschine erreicht werden kann.

Da solche Sauganlagen in der Regel bei mehrzylindrigen Einspritzmotoren verwendet werden, besitzt eine derartige Sauganlage mehrere Saugrohre, die nebeneinander angeordnet sind und über eine gemeinsame Ansaugleitung mit Luft versorgt werden.

Sauganlagen der oben beschriebenen Art sind sowohl in Metall- als auch in Kunststoffausführungen verwendet worden. Die Steuerklappe wird dabei zumeist in einem Führungsring drehbar gelagert, der den Rand des genannten Durchbruchs in der Seitenwand der Luftkammer abschließt. Auch die Steuerklappe sowie der Führungsring sind bereits teils in Metall, teils in Kunststoff gefertigt worden.

Bislang wurden der Führungsring und die darin gelagerte Steuerklappe separat gefertigt und anschließend in einem eigenen Arbeitsgang zusammenmontiert. Diese Vorgehensweise stellt einen beträchtlichen Aufwand bei der Fertigung dar.

Eine weitere Sauganlage ist aus der US-PS 5,005,532 bekannt, bei der mittels einer Steuerklappe zwei spiralförmige Saugrohre unterschiedlicher Länge zuschaltbar sind. Die Steuerklappe zum Zuschalten des entsprechenden Saugrohres befindet sich außerhalb desselben in einer separaten Einheit, die zwischen Ansaugkanal der Brennkraftmaschine und der Sauganlage angeordnet ist.

Aufgabe der Erfindung ist es daher, eine Sauganlage vorzuschlagen, bei der die Teile mit wenig Aufwand montiert werden können.

Diese Aufgabe wird ausgehend von einer Sauganlage der einleitend genannten Art durch die kennzeichnenden Merkmale des Anspruchs 1 gelöst.

Durch die in den Unteransprüchen genannten Maßnahmen sind vorteilhafte Weiterbildungen und Ausführungen der Erfindung möglich.

### Vorteile der Erfindung:

Erfindungsgemäß wird bei der Sauganlage der Führungsring und die Steuerklappe als eine Einheit ausgebildet, in dem der Führungsring einstückig ausgeführt ist und an die Steuerklappe zwei im wesentlichen einander gegenüberliegende Lagerzapfen angeformt sind, die den Führungsring durchsetzen. Auf diese Weise kann die gesamte aus Führungsring und Steuerklappe bestehende Einheit ohne zusätzliche Arbeitsschritte in die Sauganlage eingebaut werden. Weiterhin ist durch die beschriebene Ausgestaltung von Führungsring und Steuerklappe die Steuerklappe unverlierbar in dem Führungsring gehaltert.

Zur genauen Fixierung der Steuerklappe in axialer Richtung der Lagerzapfen empfiehlt es sich, an den Lagerzapfen jeweils eine Ringschulter auszubilden, mittels denen die Steuerklappe in der genannten Richtung fixiert wird.

Vorteilhafterweise wird wenigstens ein Betätigungshebel an einem Lagerzapfen außerhalb des Führungsrings angeformt, um die Steuerklappen zu betätigen.

Beim Betrieb mehrerer aneinander gekoppelter Steuerklappen, wie dies beispielsweise bei einem Mehrzylinder-Motor der Fall ist, ist es wichtig, daß alle Steuerklappen durch gemeinsame Betätigung möglichst in die gleiche Stellung zu bringen sind. Hierzu wird jeweils ein Hebel an jedem der beiden Lagerzapfen außerhalb des Führungsrings der Steuerklappen angeformt. Über diese Hebel kann jede Steuerklappe betätigt werden, wobei insbesondere eine Kopplung mehrerer aneinander gereihter Steuerklappen über diese Hebel möglich ist. Die hierzu benötigten Kupplungselemente werden vorzugsweise zugleich mit den Betätigungshebeln an diese angeformt.

Vorteilhaft ist es hierbei, diese Hebel möglichst lang, d. h. in der Größenordnung der halben Klappenlänge oder mehr auszubilden. Durch diese lange Hebelausbildung werden die Fehler in der Winkelstellung der einzelnen Klappen zueinander reduziert, die beispielsweise durch ein leichtes Spiel in den Kupplungen verschiedener Hebel zustandekommen können.

Zur weiteren Reduzierung dieser Fehler empfiehlt es sich, die angeformten Kupplungselemente am Ende der Hebel als Steckkupplungen auszubilden, die so dimensioniert sind, daß sie beim Ineinanderstecken der Hebel, unter Umständen auch unter einer leichten Verspannung, formschlüssig ineinandergreifen. Hierdurch wird eine spielfreie gemeinsame Betätigung mehrerer aneinandergereihter Steuerklappen möglich.

Vorzugsweise wird die Lagerung der Lagerzapfen durch Einsetzen wenigstens einer Metallbuchse verbessert. Diese Metallbuchse kann in den Führungsring eingesetzt und von einem Lagerzapfen durchsetzt werden oder aber auch einen Lagerzapfen unmittelbar ummanteln. Die Metallbuchse kann hierbei entweder am Führungsring oder am Lagerzapfen fest angebracht sein oder aber in einer besonderen Ausführungsform sowohl gegenüber dem Führungsring als auch gegenüber dem Lagerzapfen gleitfähig gelagert sein. Es wäre auch denkbar, zwei Metallbuchsen vorzusehen, von denen eine in den Führungsring eingesetzt ist und eine den Lagerzapfen ummantelt. Dabei findet eine Gleitbewegung zwischen den Metallbuchsen statt.

Vorteilhafterweise werden der Führungsring und/oder die Steuerklappe aus Kunststoff, beispielsweise aus Polyamid gefertigt. Hierdurch ergibt sich insbesondere bei großen Stückzahlen eine preiswerte Herstellung der erfindungsgemäßen Sauganlage.

In einer besonderen Ausführungsform wird der Kunststoff des Führungsrings und/oder der Steuerklappe durch einen Zusatz verstärkt. Ein derartiger Zusatz kann beispielsweise aus Glasfasern bestehen, die die mechanische Belastbarkeit des so verstärkten Kunststoffs deutlich erhöhen.

Vorzugsweise wird die Steuerklappe mit Verstärkungsrippen oder sonstigen Profilformen versehen, um die Stabilität bei geringem Materialaufwand weiter zu erhöhen.

Ein weiterer Materialzusatz kann in Erwägung gezogen werden, um die Gleiteigenschaften zu verbessern. In Frage käme bei Polyamid als Grundmaterial zum Beispiel der Zusatz Molybdänsulfid.

Vorteilhafterweise wird sowohl der Führungsring als auch das Saugrohr mit Haltemittel für den Führungsring ausgestattet. Diese Haltemittel werden vorzugsweise als Nut- und Federverbindung zwischen dem Führungsring und dem Saugrohr ausgebildet. Weist beispielsweise der Führungsring eine äußere Ringnut auf, so empfiehlt es sich, das Saugrohr mit einer entsprechenden Ringfeder zu versehen.

Bei der Montage der erfindungsgemäßen Sauganlage, deren Saugrohr in Mehrschalenbauweise, im einfachsten Fall in Zweischalenbauweise, zusammengesetzt ist, wird die Ringfeder vorzugsweise aus Teilringfedern, zum Beispiel aus zwei Halbringfedern zusammengesetzt. Der Führungsring samt Steuerklappe wird dabei zwischen die Schalen des Saugrohres eingelegt, bevor diese zusammengesetzt werden.

Zum Herstellen der erfindungsgemäßen Sauganlage mit Führungsring empfiehlt sich die Verwendung eines Mehrkomponenten-Spritzgußverfahrens, bei dem Steuerklappe und Führungsring in einer einzigen Spritzgußform gefertigt werden. Durch geeignete Materialauswahl kann hierbei die Materialschwindung zur Herstellung einer spielfreien Lagerung der Steuerklappe im Führungsring ausgenutzt werden. Die Steuerklappe kann durch dieses Herstellungsverfahren sowohl in radialer als auch in axialer Richtung spielfrei im Führungsring angebracht werden. Auch der dichte Abschluß der Steuerklappe mit dem Führungsring in geschlossenem Zustand entlang des Außenumfangs der Steuerklappe kann mit dem vorliegenden Herstellungsverfahren gewährleistet werden. Durch die spielfreie Lagerung ist ein klapperfreier und zuverlässiger Betrieb möglich.

Vorteilhafterweise wird in dem beschriebenen Herstellungsverfahren, wie bereits oben angeführt, sowohl für den Führungsring als auch für die Steuerklappe Polyamid verwendet, wobei bei Bedarf ein Verstärkungszusatz beispielsweise Glasfasern zur Verbesserung der Festigkeit dem Material des Führungsrings und/oder der Steuerklappe zugegeben wird.

Eine ausreichende Festigkeit mit guter Lagerung der Steuerklappe wurde mit folgenden Materialzusammensetzungen erzielt.

| Führungsring | | Steuerklappe |
|---|---|---|
| 1. | Polyamid mit 50 % Glasfaserzusatz mit Metallbuchse | Polyamid mit 35 % Glasfaserzusatz mit Metallbuchse |
| 2. | Polyamid mit 50 % Glasfaserzusatz mit Metallbuchse | Polyamid ohne Glasfaserzusatz und ohne Metallbuchse |
| 3. | Polyamid ohne Glasfaserzusatz mit Metallbuchse | Polyamid ohne Glasfaserzusatz jedoch mit Molybdänsulfid mit Metallbuchse |
| 4. | Polyamid ohne Glasfaserzusatz ohne Metallbuchse | Polyamid ohne Glasfaserzusatz jedoch mit Molybdänsulfid und ohne Metallbuchse. |

Ein Ausführungsbeispiel der Erfindung ist in der Zeichnung dargestellt und wird anhand der nachfolgenden Beschreibung näher erläutert.

### Zeichnungen:

Im einzelnen zeigen
- Fig. 1: einen schematischen Querschnitt durch eine Sauganlage;
- Fig. 2: eine Detailvergrößerung des Lagers der Steuerklappe im Führungsring;
- Fig. 3: die Draufsicht auf eine Steuerklappe ohne Führungsring; und
- Fig. 4: ein weiteres Ausführungsbeispiel mit Metallbuchse.

### Ausführungsbeispiel:

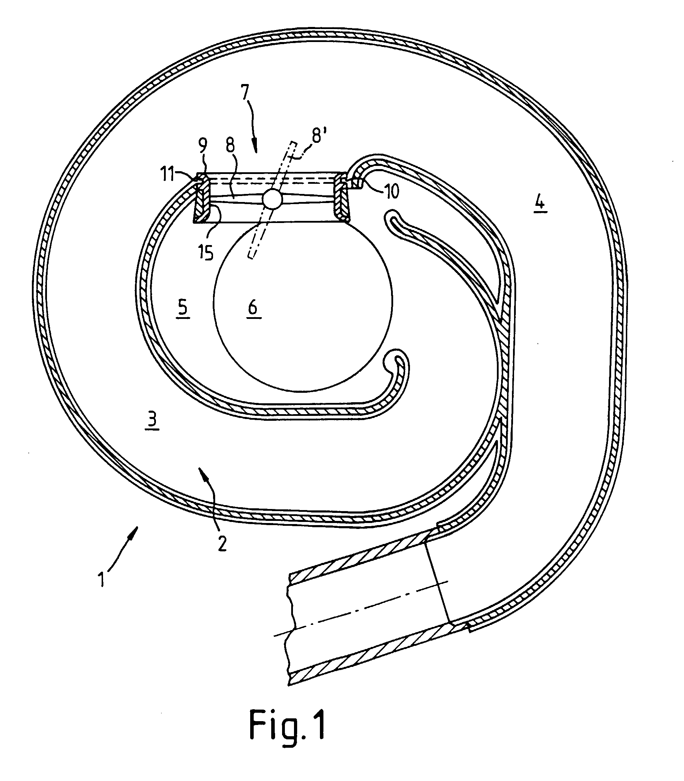

Die Sauganlage 1 gemäß. Fig. 1 weist ein spiralförmiges Saugrohr 2 auf, das in einen vorderen Abschnitt 3 sowie einen hinteren Abschnitt 4 unterteilt ist. Das Saugrohr 2 umgibt eine Luftkammer 5 mit einer großen Luftzufuhröffnung 6. In einem Wanddurchbruch 7 der Luftkammer 5 ist eine Steuerklappe 8 in ihrem Führungsring 9 angeordnet. Der Führungsring 9 ist über eine Ringnut 10 in einer passenden Ringfeder 11 gehalten.

Die Steuerklappe dient dazu, die effektive Rohrlänge des Saugrohrs 2 einzustellen. Die Ansaugluft wird senkrecht zur Spiralebene durch die Zufuhröffnung 6 in die Luftkammer 5 eingesaugt. Bei geschlossener Steuerklappenstellung 8 muß die Luft sodann ihren Weg durch das Saugrohr 2 zunächst durch den vorderen Abschnitt 3 und anschließend durch den hinteren Abschnitt 4 zum nicht mehr dargestellten Verbrennungsmotor nehmen. Bei geöffneter Steuerklappe 8 nimmt die Luft den direkten Weg zwischen dem Führungsring hindurch und durchströmt nunmehr lediglich den hinteren Abschnitt 4 des Saugrohrs 2. Durch die unterschiedlichen Saugrohrlängen läßt sich, wie oben angeführt, ein besserer Drehmomentverlauf eines Brennstoffmotors erreichen.

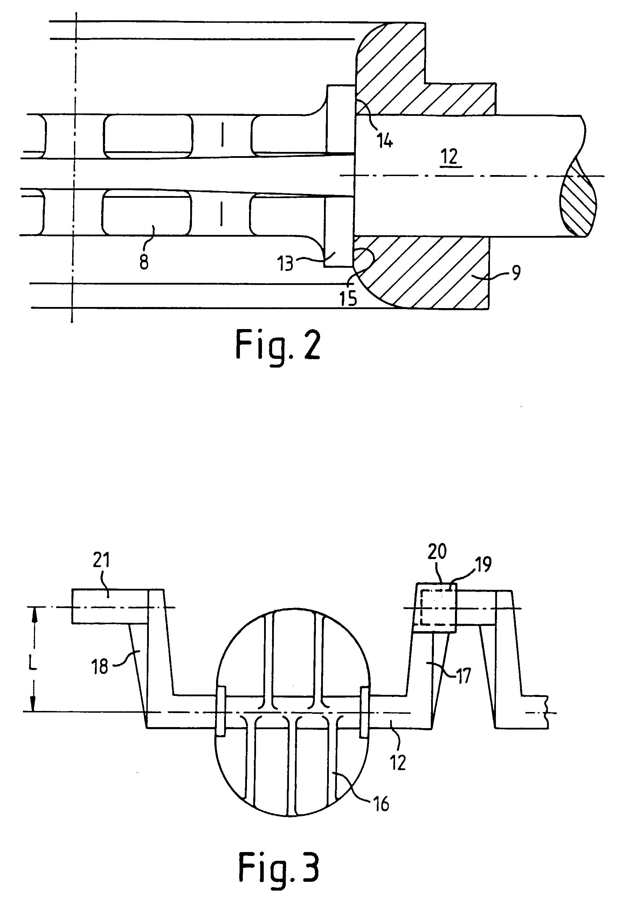

Die Darstellung gemäß Fig. 2 zeigt, wie die Steuerklappe 8 in dem Führungsring 9 gelagert ist. Ein Lagerzapfen 12 durchsetzt den Führungsring 9 vollständig. Die Steuerklappe 8 ist an gegenüberliegenden Seiten mit jeweils einem Ringvorsprung 13 versehen, so daß sich eine Ringschulter 14 beim Übergang zum Lagerzapfen 12 ergibt. Mit dieser Ringschulter liegt die Steuerklappe 8 an der Innenwand 15 des Führungsrings 9 an.

In Fig. 3 ist die Ausbildung von Verstärkungsrippen 16 deutlich erkennbar. Weiterhin ist ersichtlich, daß die Lagerzapfen 12 beidseitig der Steuerklappe 8 mit jeweils einem Betätigungshebel 17, 18 versehen sind. An den Enden der Hebel 17, 18 sind Kupplungselemente angebracht. An einem Hebel 17 besteht dieses Kupplungselement aus einer angespritzten Gabel 19, die eine oben über die gesamte Länge der Gabel offene Aufnahmenut 20 umfaßt. Der andere Betätigungshebel 18 ist mit einem abgeflachten Steckelement 21 versehen.

Erfindungsgemäß wird die Steuerklappe 8 und der Führungsring 9 in einem Mehrkomponenten-Spritzgußverfahren hergestellt. Durch die geeignete Materialwahl wird hierbei die unterschiedliche Materialschwindung ausgenutzt. Hierdurch ist es möglich, eine spielfreie Lagerung der Lagerzapfen 12 in dem Führungsring 9 zu erzielen. Weiterhin ist es durch diese Materialwahl unter Ausnützung der Schwindung möglich, die Steuerklappe mit dem Ringvorsprung 13 über die Ringschulter 14 spielfrei an die Innenwand 15 des Führungsring 9 anzupassen. Hierdurch ist eine vollkommen spielfreie Lagerung der Steuerklappe 8 in dem Führungsring 9 möglich. Hieraus wiederum folgt ein vollständig klapperfreier Betrieb dieser Anordnung. Das genannte Verfahren ist kostengünstig und mit gleichbleibender Qualität durchführbar.

Weiterhin ist, ebenfalls unter Ausnutzung derselben Materialschwindung, eine gute Anpassung der Steuerklappe 8 entlang dem Innenumfang an der Innenwand 15 des Führungsrings 9 möglich, sodaß sich ein relativ dichter Abschluß bei geschlossener Steuerklappe 8 ergibt.

Durch die Verstärkungsrippen 16 ergibt sich eine ausreichende Stabilität der Steuerklappe 8 bei geringem Materialaufwand.

Die Betätigungshebel 17, 18 sind so lang ausgebildet, daß die Hebelenden mit einem Abstand von der Achse der Lagerzapfen 12 liegen, der halben Steuerklappenlänge L entspricht. Durch diese lange Hebelausbildung ergeben sich kleine Winkelfehler in der Winkelstellung der Steuerklappen 8, falls in den Kupplungen 19, 21 ein leichtes Spiel auftritt.

Die Breite der Aufnahmenut 20 sowie des Steckelements 21 können so gewählt werden, daß in eingestecktem Zustand des Steckelements 21 in die Aufnahmenut 20 beide Bauteile gegeneinander verspannt sind. Durch die vorhandene Elastizität des Kunststoffs ist dies ohne weiteres möglich. Sowohl die Betätigungshebel 17, 18 als auch die dazugehörigen Kupplungselemente 19, 20, 21 werden im gleichen, vorher beschriebenen Arbeitsgang mit angespritzt. Somit ist auch eine spielfreie und klapperfreie Aneinanderreihung mehrerer Steuerklappen 8 in jeweils einem Führungsring 9 möglich.

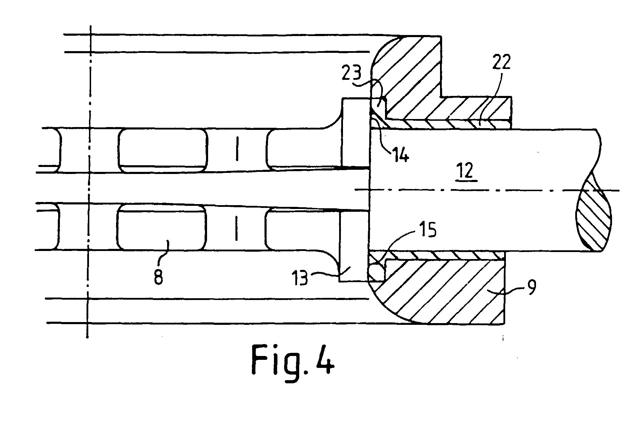

Die Darstellung gemäß Fig. 4 entspricht der Darstellung gemäß Fig. 2, wobei im jetzigen Ausführungsbeispiel eine Metallbuchse 22 zwischen Führungsring 9 und Lagerzapfen 12 vorgesehen ist. Die Metallbuchse 22 kann entweder in den Führungsring 9 eingelegt sein oder fest den Lagerzapfen 12 ummanteln. Sie kann jedoch auch gegenüber beiden Bauelementen frei drehbar vorgesehen werden.

In der dargestellten besonderen Ausführungsform ist sie mit einer Auskragung 23 versehen, so daß auch die Ringschulter 13 über ihren gesamten Durchmesser an der Metallhülse 22 anliegt. Mit der vorliegenden Form befindet sich somit die Metallhülse an jeder Stelle zwischen der drehbaren Steuerklappe und dem Führungsring, so daß sich eine gute Gleitlagerung ergibt.

Die Herstellung mit Metallbuchse kann ebenfalls im Mehrkomponenten-Spritzgußverfahren in einer Spritzgußform hergestellt werden, indem die Metallhülse um den entsprechenden Kern, der die Ausnehmung für die Lagerzapfen 12 bildet, beim Einführen in die Spritzgußform aufgelegt wird.

## Patentansprüche

1. Sauganlage für Brennkraftmaschinen mit einem spiralförmigen Saugrohr (2) und einer Einrichtung zur Einstellung der Rohrlänge dieses Saugrohres (2) und mit einer Steuerklappe (8), wobei das spiralförmige Saugrohr (2) eine zentral angeordnete Luftkammer (5) umgibt und wobei die Steuerklappe (8) die Rohrlänge des Saugrohres (2) einstellt, dadurch gekennzeichnet, daß die Steuerklappe (8) in einem Führungsring (9) drehbar gelagert ist, daß der Führungsring (9) und die Steuerklappe (8) eine Einheit bilden, indem der Führungsring (9) einstückig ausgeführt ist und an die Steuerklappe (8) zwei im wesentlichen aneinander gegenüberliegende Lagerzapfen (12) angeformt sind, die den Führungsring (9) durchsetzen, daß das Saugrohr (2) einen sich an die Luftkammer (5) anschließenden vorderen Abschnitt (3) und einen hinteren Abschnitt (4) aufweist, wobei der vordere Abschnitt (3) und der hintere Abschnitt (4) hintereinandergeschaltet die Gesamtrohrlänge des Saugrohres (2) bilden, daß in der Luftkammer (5) ein Wanddurchbruch (7) vorgesehen ist, der in das Saugrohr (2) an der Stelle zwischen dem vorderen Abschnitt (3) und dem hinteren Abschnitt (4) einmündet, und daß in den Wanddurchbruch (7) der Führungsring (9) mit der Steuerklappe (8) eingesetzt ist.

2. Sauganlage nach Anspruch 1, dadurch gekennzeichnet, daß an jedem Lagerzapfen (12) eine Ringschulter (13) ausgebildet ist, mittels denen die Steuerklappe (8) in axialer Richtung der Lagerzapfen im Führungsring (9) fixiert ist.

3. Sauganlage nach Anspruch 1 oder 2, dadurch gekennzeichnet, daß wenigstens ein Betätigungshebel (17, 18) an einen Lagerzapfen (12) der Steuerklappe (8) angeformt ist.

4. Sauganlage nach Anspruch 3, dadurch gekennzeichnet, daß zwei Betätigungshebel (17, 18) vorgesehen sind, die jeweils mit Kupplungselementen (19, 20, 21) versehen sind.

5. Sauganlage nach Anspruch 4, dadurch gekennzeichnet, daß die Kupplungselemente (19, 20, 21) als Steckkupplung ausgebildet sind, wobei jeweils zwei Kupplungselemente (19, 20, 21) von zwei benachbart angeordneten Steuerklappen (8) formschlüssig ineinander greifen.

6. Sauganlage nach einem der vorhergehenden Ansprüche, dadurch gekennzeichnet, daß der oder die angeformten Betätigungshebel so groß ausgebildet werden, daß das Hebelende um wenigstens die Hälfte (L) der Steuerklappenlänge gegenüber der Drehachse der Steuerklappe (8) beabstandet ist.

7. Sauganlage nach einem der vorhergehenden Ansprüche, dadurch gekennzeichnet, daß zur Lagerung der Lagerzapfen (12) im Führungsring (9) wenigstens eine Metallbuchse eingesetzt ist.

8. Sauganlage nach einem der vorhergehenden Ansprüche, dadruch gekennzeichnet, daß zur Lagerung der Lagerzapfen (12) wenigstens ein Lagerzapfen (12) mit einer Metallbuchse ummantelt ist.

9. Sauganlage nach einem der vorhergehenden Ansprüche, dadurch gekennzeichnet, daß der Führungsring (9) und die Steuerklappe (8) aus Kunststoff gefertigt sind.

10. Sauganlage nach Anspruch 9, dadurch gekennzeichnet, daß sowohl der Führungsring (9) als auch die Steuerklappe (8) aus Polyamid gefertigt sind.

11. Sauganlage nach Anspruch 9 oder 10, dadurch gekennzeichnet, daß der Kunststoff des Führungsrings (9) und/oder der Steuerklappe (8) durch einen Zusatz verstärkt ist.

12. Sauganlage nach Anspruch 11, dadurch gekennzeichnet, daß der Zusatz aus Glasfasern besteht.

13. Sauganlage nach einem der vorhergehenden Ansprüche, dadurch gekennzeichnet, daß Verstärkungsrippen (16) zur Erhöhung der Stabilität an die Steuerklappe (8) angeformt sind.

14. Sauganlage nach einem der vorhergehenden Ansprüche, dadurch gekennzeichnet, daß der Führungsring (9) sowie das Saugrohr Haltemittel für den Führungsring aufweisen.

## Claims

1. Intake system for internal combustion engines with a spiral intake pipe (2) and a device for adjusting the pipe length of this intake pipe (2) and with a control flap (8), the spiral intake pipe (2) surrounding a centrally arranged air chamber (5), and the control flap (8) adjusting the pipe length of the intake pipe (2), characterized in that the control flap (8) is mounted rotatably in a guide ring (9),in that the guide ring (9) and the control flap (8) form a unit by virtue of the fact that the guide ring (9) is of one-piece design and two essentially mutually opposite bearing journals (12) are formed integrally on the control flap (8) and pass through the guide ring (9), in that the intake pipe (2) has a front portion (3) adjoining the air chamber (5) and a rear portion (4), the front portion (3) and the rear portion (4) being arranged in series and forming the overall pipe length of the intake pipe (2), in that the air chamber (5) is provided with a wall aperture (7) which opens into the intake pipe (2) at the location between the front portion (3) and the rear portion (4), and in that the guide ring (9) with the control flap (8) is inserted into the wall aperture (7).

2. Intake system according to Claim 1, characterized in that there is formed on each bearing journal (12) an annular shoulder (13), by means of which the control flap (8) is fixed in the guide ring (9) in the axial direction of the bearing journals.

3. Intake system according to Claim 1 or 2, characterized in that at least one actuating lever (17, 18) is formed integrally on a bearing journal (12) of the control flap (8).

4. Intake system according to Claim 3, characterized in that two actuating levers (17, 18) are provided, each being provided with coupling elements (19, 20, 21).

5. Intake system according to Claim 4, characterized in that the coupling elements (19, 20, 21) are designed as a plug-in coupling, two coupling elements (19, 20, 21) of two adjacently arranged control flaps (8) in each case engaging positively in one another.

6. Intake system according to one of the preceding claims, characterized in that the integrally formed actuating lever or levers is/are of a size such that the end of the lever is at a distance from the axis of rotation of the control flap (8) equivalent to at least half (L) the length of the control flap.

7. Intake system according to one of the preceding claims, characterized in that at least one metal bush is used to support the bearing journals (12) in the guide ring (9).

8. Intake system according to one of the preceding claims, characterized in that, to support the bearing journals (12), at least one bearing journal (12) is sheathed with a metal bush.

9. Intake system according to one of the preceding claims, characterized in that the guide ring (9) and the control flap (8) are manufactured from plastic.

10. Intake system according to Claim 9, characterized in that both the guide ring (9) and the control flap (8) are manufactured from polyamide.

11. Intake system according to Claim 9 or 10, characterized in that the plastic of the guide ring (9) and/or of the control flap (8) is reinforced by means of an additive.

12. Intake system according to Claim 11, characterized in that the additive comprises glass fibres.

13. Intake system according to one of the preceding claims, characterized in that reinforcing ribs (16) are formed integrally on the control flap (8) to increase its sturdiness.

14. Intake system according to one of the preceding claims, characterized in that the guide ring (9) and the intake pipe have retaining means for the guide ring.

## Revendications

1. Installation d'aspiration pour moteur à combustion interne comportant une tubulure d'aspiration (2) en forme de spirale et une installation pour régler la longueur de cette tubulure d'aspiration (2) ainsi qu'un volet de commande (8), la tubulure d'aspiration (2) en forme de spirale entourant une chambre d'air (5), centrale et le volet de commande (8) réglant la longueur de la tubulure (2),
caractérisée en ce que
- le volet de commande (8) est monté à rotation dans un anneau de guidage (9),
- l'anneau de guidage (9) et le volet de commande (8) forment un ensemble, dans lequel l'anneau de guidage (9) est réalisé en une seule pièce, et le volet de commande (8) porte deux tourillons de palier (12) essentiellement opposés et traversant l'anneau de guidage (9),
- la tubulure d'aspiration (2) comporte un segment avant (3) adjacent à la chambre d'air (5) et un segment arrière (4),
- le segment avant (3) et le segment arrière (4) forment par leur mise en série la longueur totale de la tubulure d'aspiration (2),
- la chambre d'air (5) comporte un passage (7) dans sa paroi qui débouche dans la tubulure d'aspiration (2) à l'endroit compris entre le segment avant (3) et le segment arrière (4) et,
- l'anneau de guidage (9) avec le volet de commande (8) est placé dans le passage (7) de la paroi.

2. Installation d'aspiration selon la revendication 1,
caractérisée par
un épaulement annulaire (13) réalisé sur chaque tourillon de palier (12) par lequel le volet de commande (8) est bloqué dans la direction axiale des tourillons de palier dans l'anneau de guidage (9).

3. Installation d'aspiration selon la revendication 1 ou 2,
caractérisée en ce qu'
au moins un levier d'actionnement (17, 18) est formé sur un tourillon de palier (12) du volet de commande (8).

4. Installation d'aspiration selon la revendication 3,
caractérisée par
deux leviers d'actionnement (17, 18) munis chaque fois d'éléments de couplage (19, 20, 21).

5. Installation d'aspiration selon la revendication 4,
caractérisée en ce que
les éléments de couplage (19, 20, 21) sont des couplages par enfichage et chaque fois deux éléments de couplage (19, 20, 21) de deux volets de commande (8) voisins pénètrent l'un dans l'autre par une liaison de forme.

6. Installation d'aspiration selon l'une des revendications précédentes,
caractérisée en ce que
le ou les leviers d'actionnement moulés sont suffisamment grands pour que l'extrémité de levier soit écartée d'au moins la moitié (L) de la longueur du volet de commande par rapport à l'axe de rotation du volet commande (8).

7. Installation d'aspiration selon l'une quelconque des revendications précédentes,
caractérisée en ce qu'
au moins un manchon métallique est logé dans l'anneau de guidage (9) pour recevoir le tourillon de palier (12).

8. Installation d'aspiration selon l'une quelconque des revendications précédentes,
caractérisée en ce qu'
au moins un tourillon de palier (12) est entouré d'un manchon métallique pour le montage du palier (12).

9. Installation d'aspiration selon l'une quelconque des revendications précédentes,
caractérisée en ce que
l'anneau de guidage (9) et le volet de commande (8) sont fabriqués en matière plastique.

10. Installation d'aspiration selon la revendication 9,
caractérisée en ce qu'
à la fois l'anneau de guidage (9) et le volet de commande (8) sont en polyamide.

11. Installation d'aspiration selon la revendication 9 ou 10,
caractérisée en ce que
la matière plastique de l'anneau de guidage (9) et/ou du volet de commande (8) est renforcée par un additif.

12. Installation d'aspiration selon la revendication 11,
caractérisée en ce que
l'additif est formé de fibres de verre.

13. Installation d'aspiration selon l'une quelconque des revendications précédentes,
caractérisée en ce que
des nervures de renforcement (16) sont formées sur le volet de commande (8) pour augmenter sa solidité.

14. Installation d'aspiration selon l'une quelconque des revendications précédentes,
caractérisée en ce que
l'anneau de guidage (9) et la tubulure d'aspiration comportent un moyen de fixation de l'anneau de guidage.
